# EUROPEAN PATENT APPLICATION

(11) **EP 2 597 790 A2**
(43) Date of publication of application: **29.05.2013**
(21) Application number: 12732331.9
(22) Date of filing: 14.02.2012
(51) Int. Cl.: H04B 10/08, H04B 10/12, H04W 88/08

(54) **DELAY MEASUREMENT METHOD AND OPTICAL TRANSPORT NETWORK DEVICE**

(71) Applicant: Huawei Technologies Co., Ltd., Shenzhen, Guangdong 518129 (CN)
(72) Inventor: TAN, Qian, Shenzhen Guangdong 518129 (CN)
(74) Representative: Lord, Michael
(86) International application number: PCT/CN2012/071110
(87) International publication number: WO 2012/092903

(57) **Abstract**

Embodiments of the present invention provide a delay measurement method and an optical transport network device, which relate to the field of communications. The method includes: acquiring, according to delay information from a first optical transport network device to a second optical transport network device in an optical transport network, a delay of transporting service data from the first optical transport network device to the second optical transport network device; adjusting, according to the delay, residence time of the service data in the optical transport network so that the time is equal to a preset reference delay. The device includes an acquisition module and a compensation module. Through the method of the present invention, uplink and downlink delays can be accurately measured, and the residence time of the service data in the optical transport network is adjusted to be consistent with the reference delay, thereby solving the problem in the prior art of inaccurate delay measurement resulting from asymmetry between uplink and downlink delays.

## Description

### FIELD OF THE INVENTION

The present invention relates to the field of communications, and in particular, to a delay measurement method and an optical transport network device.

### BACKGROUND OF THE INVENTION

At present, when wireless networks are deployed, a lot of distributed base station architecture is used, that is, a BBU (Base Band Unit, base band unit) may support multiple RRUs (Remote RF Unit, remote radio frequency units). A distance between the BBU and an RRU connected to the BBU is not too long and is usually dozens of meters. The BBU and the RRU are connected to each other through two optical fibers, which are an uplink optical fiber and a downlink optical fiber respectively, where the uplink indicates a direction from the RRU to the BBU, and the downlink indicates a direction from the BBU to the RRU. An interface between the BBU and the RRU is an interface based on an open CPRI (Common Public Radio Interface, common public radio interface) or an IR (Interface between the RRU and the BBU, interface between the base band unit and remote radio frequency unit) so that the BBU and RRU may be stably connected to devices of main stream manufacturers.

When the BBU and RRU transmit data to each other, a path delay needs to be compensated. A basic model for measuring a delay between the BBU and the RRU is that, the BBU sends a measurement signal, the RRU receives the measurement signal and then loops back the signal to the BBU, and the BBU calculates a difference value between sending time and receiving time and divides the difference value by 2 to acquire a delay of a unidirectional optical fiber. The BBU and RRU perform time compensation according to the delay. A premise of the measurement model is that lengths of the uplink and downlink optical fibers need to be symmetric, so that an accurate unidirectional delay can be acquired. If the uplink and downlink optical fibers are asymmetric, a difference between an acquired delay and an actual delay exists, and the greater the asymmetry is, the greater the difference is. When the difference value exceeds a certain threshold, the BBU and RRU cannot communicate with each other normally.

The existing BBU and RRU are deployed to be very close to each other. For example, the RRU is deployed at a top of a transmitting tower, the BBU is deployed in a machine room below the transmitting tower or a machine room in a building, and the RRU and BBU are connected to each other through optical fibers of dozens of meters so that it is easy to ensure that a length of the uplink optical fiber equals a length of the downlink optical fiber. In addition, when an optical fiber functions as a physical channel, in an optical fiber of a certain length, a delay of data transmission in the optical fiber is basically fixed with a very small dynamic change that may be ignored. Therefore, a relatively accurate unidirectional delay may be acquired by using the foregoing delay measurement method.

However, with the rapid development of wireless technologies, a C-RAN (C-Radio Access Network, green radio access network architecture based on centralized processing, cooperative radio, and real-time cloud computing architecture) will be next generation radio access network architecture. In the C-RAN, the BBUs are disposed centrally, which may be dozens of kilometers away from the RRU, and several OTN (Optical Transport Network, optical transport network) devices act as devices for extending transmission distance between the BBU and the RRU. In such architecture, first, in a laying process, a difference between a length of an uplink optical fiber of dozens of kilometers and a length of a downlink optical fiber of dozens of kilometers is big, so a difference between a data delay in the uplink optical fiber and a data delay of the downlink optical fiber is also big; then, multiple delay units may be introduced into an OTN device, where the most typical delay unit is an FIFO (First Input First Output, first input first output), and an initial depth of each FIFO after being powered on each time may be stabilized at different values, so a serial connection of multiple FIFOs may result in uncertainty of delays in a data transmission path; and then, in an operating process of the FIFO, the depth also possibly fluctuates within a certain range, which may cause a dynamic change of a unidirectional delay.

In sum, if existing OTN devices are directly adopted for performing a remoting operation between the BBU and the RRU, accuracy of the data delay cannot be controlled, and the difference between uplink and downlink delays may be nearly 100 ns. Adopting the delay measurement method in the prior art may cause a great error, so that the BBU and the RRU cannot communicate with each other normally.

### SUMMARY OF THE INVENTION

In order to solve a problem in the prior art of inaccurate delay measurement resulting from asymmetry between uplink and downlink delays, embodiments of the present invention provide a delay measurement method and an optical transport network device. The technical solution is as follows.

In an aspect, a delay measurement method is provided, which includes:
acquiring, according to delay information from a first optical transport network device to a second optical transport network device in an optical transport network, a delay of transporting service data from the first optical transport network device to the second optical transport network device, where the first optical transport network device is connected to a base band unit and the second optical transport network device is connected to a remote radio frequency unit, or the first optical transport network device is connected to the remote radio frequency unit and the second optical transport network device is connected to the base band unit;
adjusting, according to the delay, residence time of the service data in the optical transport network so that the time is equal to a preset reference delay.

In another aspect, an optical transport network device is provided, where the optical transport network device is called a second optical transport network device, and the second optical transport network device includes:
an acquisition module, configured to acquire, according to delay information from a first optical transport network device to the second optical transport network device in an optical transport network, a delay of transporting service data from the first optical transport network device to the second optical transport network device, where the first optical transport network device is connected to a base band unit and the second optical transport network device is connected to a remote radio frequency unit, or the first optical transport network device is connected to the remote radio frequency unit and the second optical transport network device is connected to the base band unit; and
a compensation module, configured to adjust, according to the delay acquired by the acquisition module, residence time of the service data in the optical transport network so that the time is equal to a preset reference delay.

The technical solutions of the present invention bring the following beneficial effects:

The unidirectional delay from the first OTN device to the second OTN device is accurately acquired according to the delay information, and compensation is performed according to the delay, that is, the residence time of CPRI service data in the OTN network is adjusted so that uplink and downlink residence time are basically equal, so that a problem in the prior art of inaccurate delay measurement resulting from asymmetry between uplink and downlink delays can be solved, so as to enable a BBU and an RRU to communicate with each other normally.

### BRIEF DESCRIPTION OF THE DRAWINGS

For a better understanding of the technical solutions in the embodiments of the present invention, the accompanying drawings for illustrating the embodiments are briefly described below. Apparently, the accompanying drawings in the following description illustrate some embodiments of the present invention, and persons skilled in the art may derive other accompanying drawings from these accompanying drawings without creative efforts.

FIG. 1 is a flow chart of a delay measurement method provided by Embodiment 1 of the present invention;

FIG. 2 is a schematic structural diagram of an extended OTN structure provided by Embodiment 2 to Embodiment 5 of the present invention;

FIG. 3 is a flow chart of a delay measurement method provided by Embodiment 2 of the present invention;

FIG. 4 is a flow chart of a delay measurement method provided by Embodiment 3 of the present invention;

FIG. 5 is a flow chart of a delay measurement method provided by Embodiment 4 of the present invention;

FIG. 6 is a schematic structural diagram of a second OTN device provided by Embodiment 5 of the present invention; and

FIG. 7 is a schematic structural diagram of another second OTN device provided by Embodiment 5 of the present invention.

### DETAILED DESCRIPTION OF THE EMBODIMENTS

For a better understanding of the objectives, technical solutions, and advantages of the present invention, the embodiments of the present invention are described in further detail below with reference to the accompanying drawings.

### Embodiment 1

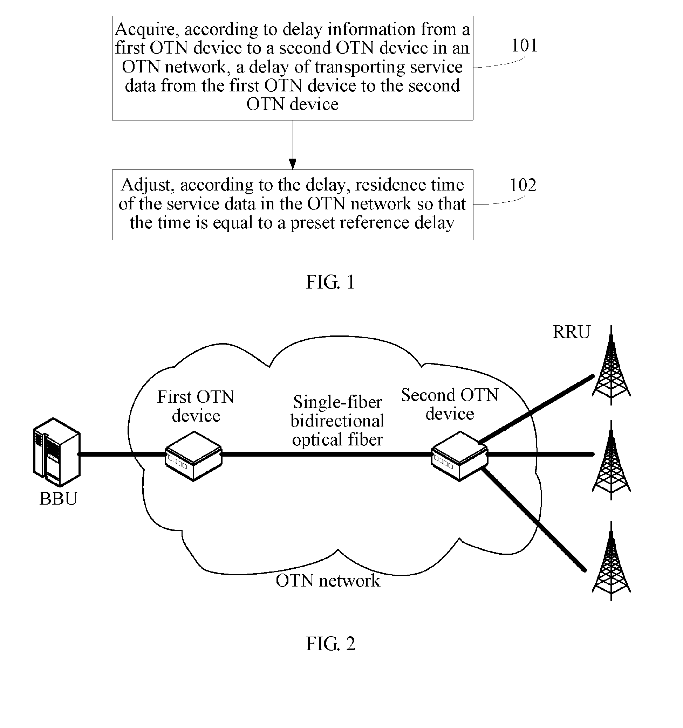

An embodiment of the present invention provides a delay measurement method. Referring to FIG. 1, a flow of the method includes:

101: Acquire, according to delay information from a first OTN device to a second OTN device in an OTN network, a delay of transporting service data from the first OTN device to the second OTN device.

The first OTN device is connected to a BBU and the second OTN device is connected to an RRU, or the first OTN device is connected to the RRU and the second OTN device is connected to the BBU.

102: Adjust, according to the delay, residence time of the service data in the OTN network so that the time is equal to a preset reference delay.

In the method provided by the embodiment of the present invention, the unidirectional delay from the first OTN device to the second OTN device is accurately acquired according to the delay information, and the compensation is performed according to the delay, that is, the residence time of CPRI service data in the OTN network is adjusted so that uplink and downlink residence time are basically equal, a problem in the prior art of inaccurate delay measurement resulting from asymmetry between uplink and downlink delays can be solved, so as to enable the BBU and RRU to communicate with each other normally.

### Embodiment 2

An embodiment of the present invention provides a delay measurement method. In a remoting development operation of a CPRI or an IR through OTN devices, as regards a problem of asymmetry between lengths of uplink and downlink optical fibers, OTN devices in an OTN network may be connected through a single-fiber bidirectional optical fiber, as shown in FIG. 2. In this way, uplink service data and downlink service data are transmitted in the same optical fiber, thereby ensuring symmetry between lengths of the uplink and downlink optical fibers. In the same way, single-fiber bidirectional optical fibers may be adopted between a BBU and the OTN device and between an RRU and the OTN device for connection. If a distance between a BBU and the OTN device and a distance between an RRU and the OTN device are short, an ordinary double-fiber connection manner may be adopted as long as it is ensured that lengths of the two optical fibers are the same. In FIG. 2, a first OTN device is connected to the BBU and a second OTN device is connected to the RRU. In an actual application, it is also possible that the first OTN device is connected to the RRU and the second OTN device is connected to the BBU, which is not specifically limited in the embodiment of the present invention. One or more other OTN devices may also exist between the first OTN device and the second OTN device.

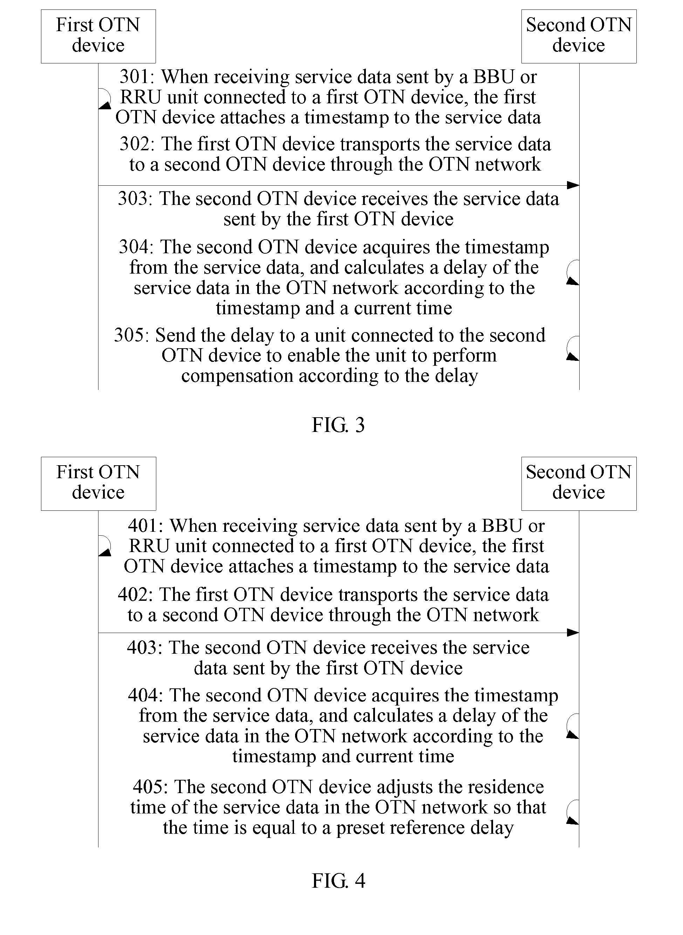

As regards a problem of initial inconsistency and fluctuation of delay units, referring to FIG. 3, a delay measurement method that solves the problem includes:

301: When receiving service data sent by a BBU or RRU unit connected to a first OTN device, the first OTN device attaches a timestamp to the service data.

The timestamp records a time point at which the first OTN device receives the service data, that is, a time point at which the service data enters the OTN network. The timestamp is delay information.

Specifically, some undefined reserved overhead fields are reserved in frame headers of the service data of CPRI and IR services. When the service data enters the first OTN device, we may record the time point at which the service data enters the first OTN device in the reserved overhead field of the service data, that is, a timestamp is attached to the service data.

302: The first OTN device transports the service data to a second OTN device through the OTN network.

Specifically, the service data is transported from the first OTN device to the second OTN device through a single-fiber bidirectional optical fiber.

303: The second OTN device receives the service data sent by the first OTN device.

A clock domain of the first OTN device is the same as that of the second OTN device, that is, the first OTN device and the second OTN device have the same time and frequency. Since OTN devices in the OTN network are connected to each other by using single-fiber bidirectional optical fibers, a process of performing clock synchronization between the first OTN device and the second OTN device is very simple. The synchronization may be performed by adopting either a 1588 solution or by tracking, by a network element, a physical layer clock of a master network element. The clock synchronization manners both belong to the prior art and are not described here again.

304: The second OTN device acquires the timestamp from the service data, and calculates a delay of the service data in the OTN network according to the timestamp and a current time.

Specifically, the second OTN device reads the timestamp from the reserved overhead field of the service data, that is, the time point when the service data enters the OTN network, compares the timestamp with the current time, and subtracts a time in the timestamp from the current time to acquire the delay of the service data in the OTN network.

305: Send the delay to a unit connected to the second OTN device to enable the unit to perform compensation according to the delay.

Specifically, the second OTN device may write a calculated delay into the reserved overhead field of the service data and sends the service data to the BBU or RRU connected to the second OTN device. After receiving the service data, the BBU or RRU reads the delay from the reserved overhead field in the service data, adds a delay link in an uplink or downlink direction according to magnitude of the delay that is read, and adjusts delays in two directions to achieve delay consistency.

The method provided by the embodiment of the present invention may be applied to an OSN1800 device for implementation.

It should be noted that, the method provided by the embodiment of the present invention not only may be applied to common interfaces between the BBU and RRU such as the CPRI or IR, but also may be applied to other similar scenarios where strict control on uplink and downlink path delays is needed.

In the method provided by the embodiment of the present invention, first, the service data is transported between OTN devices in the OTN network by using the single-fiber bidirectional optical fiber so that uplink and downlink service data are transmitted in the same optical fiber, thereby ensuring symmetry between lengths of the uplink and downlink optical fibers; then, the delay of the service data in the OTN network is calculated by attaching the timestamp to the service data, and compensation is performed according to the delay so that uplink and downlink residence time are basically equal, thereby being capable of solving a problem that accurate compensation cannot be performed resulting from the asymmetry between uplink and downlink delays and the fluctuation. Through the method provided by the embodiment of the present invention, a delay problem is solved, the transmission distance between CPRIs and the transmission distance between IRs are successfully extended through the OTN and deployed in a C-RAN, thereby generating milestone influence on a development process of the C-RAN.

### Embodiment 3

An embodiment of the present invention provides a delay measurement method. In a remoting development operation of a CPRI or an IR through OTN devices, as regards a problem of asymmetry between lengths of uplink and downlink optical fibers, OTN devices in an OTN network may be connected through a single-fiber bidirectional optical fiber, as shown in FIG. 2. In this way, uplink service data and downlink service data are transmitted in the same optical fiber, thereby ensuring symmetry between lengths of the uplink and downlink optical fibers. In the same way, single-fiber bidirectional optical fibers may be adopted between a BBU and the OTN device and between an RRU and the OTN device for connection. If a distance between a BBU and the OTN device and a distance between an RRU and the OTN device are short, an ordinary double-fiber connection manner may be adopted as long as it is ensured that lengths of the two optical fibers are the same. In FIG. 2, a first OTN device is connected to the BBU and a second OTN device is connected to the RRU. In an actual application, it is also possible that the first OTN device is connected to the RRU and the second OTN device is connected to the BBU, which is not specifically limited in the embodiment of the present invention. One or more other OTN devices may also exist between the first OTN device and the second OTN device.

As regards a problem of initial inconsistency and fluctuation of delay units, referring to FIG. 4, a delay measurement method that solves the problem includes:

401: When receiving service data sent by a BBU or RRU unit connected to a first OTN device, the first OTN device attaches a timestamp to the service data.

402: The first OTN device transports the service data to a second OTN device through the OTN network.

403: The second OTN device receives the service data sent by the first OTN device.

404: The second OTN device acquires the timestamp from the service data, and calculates a delay of the service data in the OTN network according to the timestamp and current time.

Specific implementation manners of step 401 to step 402 are the same as those of step 301 to step 304, which are not described here again.

405: The second OTN device adjusts the residence time of the service data in the OTN network so that the time is equal to a preset reference delay.

Specifically, the delay time of a buffer delay unit in the second OTN device may be adjusted according to the calculated delay and the preset reference delay, so that a sum of the calculated delay and the delay time of the buffer delay unit is equal to the reference delay. For example, in the embodiment of the present invention, that the buffer delay unit is an FIFO is taken as an example for illustration, but the embodiment is not limited thereto. The buffer FIFO may be arranged to follow other FIFOs. The calculated delay is compared with the reference delay to acquire a difference value between the calculated delay and the reference delay. According to the difference value, a depth of the buffer FIFO is adjusted, so that the delay time of the buffer FIFO is equal to the difference value, and the residence time of the service data in the OTN network is equal to the reference delay.

The reference delay is a value preset according to a previous delay change situation of the OTN, and the value may be a maximum value of a possible delay of the OTN. If the residence time of the service data in the OTN network is controlled in both the uplink and downlink by using the method, the uplink and downlink actual residence time both equal the reference delay, so the symmetry between the uplink and downlink delays may be controlled very well.

The method provided by the embodiment of the present invention may be applied to an OSN1800 device for implementation.

It should be noted that, the method provided by the embodiment of the present invention not only may be applied to common interfaces between the BBU and RRU such as the CPRI or IR, but also may be applied to other similar scenarios where strict control on uplink and downlink path delays is needed.

In the method provided by the embodiment of the present invention, first, the service data is transported between OTN devices in the OTN network by using the single-fiber bidirectional optical fiber so that uplink and downlink service data are transmitted in the same optical fiber, thereby ensuring symmetry between lengths of the uplink and downlink optical fibers; then, the delay of the service data in the OTN network is calculated by attaching the timestamp to the service data, and the delay time of the buffer delay unit is adjusted according to the delay and reference delay so that the residence time of the service data in the OTN network is equal to the reference delay, thereby being capable of solving a problem of the asymmetry between uplink and downlink delays and the fluctuation. Through the method provided by the embodiment of the present invention, a delay problem is solved, the transmission distance between CPRIs and the transmission distance between IRs are successfully extended through the OTN and deployed in a C-RAN, thereby generating milestone influence on a development process of the C-RAN.

### Embodiment 4

An embodiment of the present invention provides a delay measurement method. In a remoting development operation of a CPRI or an IR through OTN devices, as regards a problem of asymmetry between lengths of uplink and downlink optical fibers, OTN devices in an OTN network may be connected through a single-fiber bidirectional optical fiber, as shown in FIG. 2. In this way, uplink service data and downlink service data are transmitted in the same optical fiber, thereby ensuring symmetry between lengths of the uplink and downlink optical fibers. In the same way, single-fiber bidirectional optical fibers may be adopted between a BBU and the OTN device and between an RRU and the OTN device for connection. If a distance between a BBU and the OTN device and a distance between an RRU and the OTN device are short, an ordinary double-fiber connection manner may be adopted as long as it is ensured that lengths of the two optical fibers are the same. In FIG. 2, a first OTN device is connected to the BBU and a second OTN device is connected to the RRU. In an actual application, it is also possible that the first OTN device is connected to the RRU and the second OTN device is connected to the BBU, which is not specifically limited in the embodiment of the present invention. One or more other OTN devices may also exist between the first OTN device and the second OTN device.

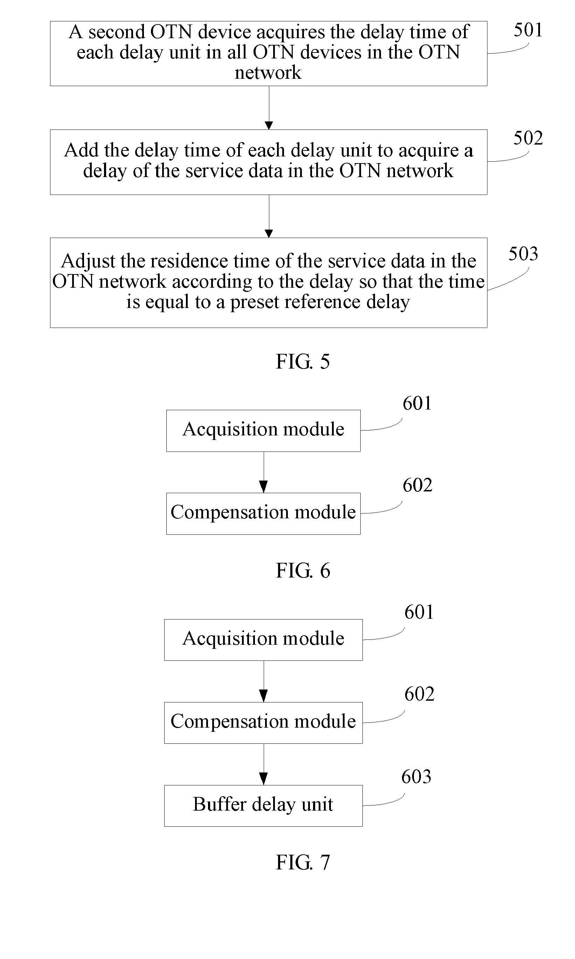

As regards a problem of initial inconsistency and fluctuation of delay units, referring to FIG. 5, a delay measurement method that solves the problem includes:

501: A second OTN device acquires the delay time of each delay unit in all OTN devices in the OTN network.

The delay time of each delay unit in all the OTN devices in the OTN network is delay information. In the embodiment of the present invention, that the delay unit is an FIFO is taken as an example for illustration, but the embodiment is not limited thereto. Specifically, a depth of each FIFO in an OTN service path is read. The depth of the FIFO is directly related to a delay of the FIFO. For example, a delay of depth 1 is 5 ns, and a delay of depth 2 is 10 ns. Therefore, in the case that a delay unit is an FIFO, the delay time of the FIFO can be acquired according to the depth of the FIFO.

502: Add the delay time of each delay unit to acquire a delay of the service data in the OTN network.

Specifically, depths of the FIFOs are added to acquire a total depth, and the total delay time of the service data in the OTN network may be acquired according to the total depth. In the method provided by the embodiment of the present invention, the total depth only needs to be measured and calculated once when the OTN device is powered on. If a fluctuation situation of the FIFO is taken into consideration, the total depth may also be measured and calculated once per second. The embodiment of the present invention does not specifically limit an interval for measuring and calculating the total depth once.

503: Adjust the residence time of the service data in the OTN network according to the delay so that the time is equal to a preset reference delay.

Specifically, the delay time of a buffer delay unit in the second OTN device may be adjusted according to the delay and the preset reference delay so that a sum of the delay and the delay time of the buffer delay unit is equal to the reference delay.

The reference delay is a value preset according to a previous delay change situation of the OTN, and the value may be a maximum value of a possible delay of the OTN. In the case that the delay unit is an FIFO, the reference delay may specifically be a reference depth, and the reference depth may be a sum of possible maximum depths of the FIFOs in the OTN network. If the delay in the OTN network is controlled in both the uplink and the downlink by using the present method, actual uplink and downlink delays each are the reference delay, so the symmetry between the uplink and downlink delays may be controlled well.

For example, in the embodiment of the present invention, that the buffer delay unit is an FIFO is taken as an example for illustration, but the embodiment is not limited thereto. The buffer FIFO may be arranged to follow other FIFOs. The total depth is compared with the reference depth to acquire a difference value between the total depth and the reference depth. According to the difference value, a depth of the buffer FIFO is adjusted, so that the depth of the buffer FIFO is equal to the difference value. The method provided by the embodiment of the present invention may be applied to an OSN1800 device for implementation.

It should be noted that, the method provided by the embodiment of the present invention may be not only applied to common interfaces between the BBU and RRU such as the CPRI or IR, but also applied to other similar scenarios where strict control on uplink and downlink path delays is needed.

In the method provided by the embodiment of the present invention, first, the service data is transported between OTN devices in the OTN network by using the single-fiber bidirectional optical fiber so that uplink and downlink service data are transmitted in the same optical fiber, thereby ensuring symmetry between lengths of the uplink and downlink optical fibers; then, the delay of the service data in the OTN network is calculated by acquiring the delay time of each delay unit in the OTN devices in the OTN network, and the delay time of the buffer delay unit is adjusted according to the delay and reference delay so that the residence time of the service data in the OTN network is equal to the reference delay, thereby being capable of solving a problem of the asymmetry between uplink and downlink delays and the fluctuation. Through the method provided by the embodiment of the present invention, a delay problem is solved, the transmission distance between CPRIs and the transmission distance between IRs are successfully extended through the OTN and deployed in a C-RAN, thereby generating milestone influence on a development process of the C-RAN.

### Embodiment 5

An embodiment of present invention provides an OTN device. The OTN device may be called a second OTN device, and an OTN network further includes a first OTN device. The first OTN device may be connected to a BBU and the second OTN device may be connected to an RRU, as shown in FIG. 2, and it is also possible that the first OTN device is connected to the RRU and the second OTN device is connected to the BBU, which is not specifically limited in the embodiment of the present invention. One or more other OTN devices may also exist between the first OTN device and the second OTN device. In addition, the second OTN device and the first OTN device transport service data to each other through a single-fiber bidirectional optical fiber. In this way, uplink service data and downlink service data are transmitted in the same optical fiber, thereby ensuring symmetry between lengths of the uplink and downlink optical fibers. In the same way, single-fiber bidirectional optical fibers may be adopted between a BBU and the OTN device and between an RRU and the OTN device for connection. If a distance between a BBU and the OTN device and a distance between an RRU and the OTN device are short, an ordinary double-fiber connection manner may be adopted as long as it is ensured that lengths of the two optical fibers are the same. The second OTN device may specifically be the second OTN device in Embodiment 1 to Embodiment 4. Referring to FIG. 6, the second OTN device includes:
an acquisition module 601, configured to acquire, according to delay information from the first OTN network device to the second OTN device in the OTN network, a delay of transporting service data from the first OTN device to the second OTN device; and
a compensation module 602, configured to adjust, according to the delay acquired by the acquisition module 601, the residence time of the service data in the OTN network so that the time is equal to a preset reference delay.

Optionally, referring to FIG. 7, the second OTN device further includes a buffer delay unit 603, and correspondingly, the compensation module 602 is specifically configured to adjust the delay time of the buffer delay unit 603 according to the delay and the preset reference delay so that a sum of the delay and the delay time of the buffer delay unit 603 is equal to the reference delay.

Optionally, the delay information may be a timestamp or the delay time of each delay unit in all OTN devices in the OTN network.

When the delay information is a timestamp, the acquisition module 601 is specifically configured to: receive service data sent by the first OTN device, where the service data includes a timestamp and the timestamp records a time point at which the first OTN device receives the service data; acquire the timestamp from the service; and calculate a delay of the service data in the OTN network according to the timestamp and current time, where a clock domain of the first OTN device is the same as that of the second OTN device.

When the delay information is the delay time of each delay unit in all OTN devices in the OTN network, the acquisition module 601 is specifically configured to acquire the delay time of each delay unit in all the OTN devices and add the delay times of each delay unit to acquire a delay of the service data in the OTN network.

Further optionally, when the delay unit is an FIFO, the acquisition module 601 is specifically configured to acquire a depth of each FIFO in all the OTN devices in the OTN network, and add depths of the FIFOs to acquire a total depth.

Correspondingly, the second OTN device further includes a buffer FIFO. The compensation module 602 is specifically configured to adjust a depth of the buffer FIFO according to the total depth and a preset reference depth so that a sum of the total depth and the depth of the buffer FIFO is equal to the reference depth.

It should be noted that, when the OTN device provided by the embodiment of the present invention performs delay measurement, only the foregoing division of the function modules is taken as an example for illustration. In an actual application, the above functions may be allocated to different function modules for implementation according to requirements, that is, an internal structure of the device is divided into different function modules, so as to implement all or part of functions described in the foregoing. In addition, the OTN device provided by the embodiment and embodiments of the delay measurement method belong to the same conception, and for the specific implementation process of the OTN device, reference may be made to embodiments of the method, and the details are not described here again.

The sequence numbers of the preceding embodiments of the present invention are merely for description purpose but do not indicate the preference of the embodiments.

Persons skilled in the art should understand that all or a part of the steps of the foregoing embodiments may be implemented through hardware, or may be implemented by a program instructing relevant hardware. The program may be stored in a computer readable storage medium. The storage medium may be a read-only memory, a magnetic disk, an optical disk, or the like.

The foregoing describes exemplary embodiments of the present invention and is not intended to limit the present invention. Any modification, equivalent replacement, or improvement made without departing the spirit and principle of the present invention shall fall within the protection scope of the present invention.

## Claims

1. A delay measurement method, comprising:
acquiring, according to delay information from a first optical transport network device to a second optical transport network device in an optical transport network, a delay of transporting service data from the first optical transport network device to the second optical transport network device, wherein the first optical transport network device is connected to a base band unit and the second optical transport network device is connected to a remote radio frequency unit, or the first optical transport network device is connected to the remote radio frequency unit and the second optical transport network device is connected to the base band unit; and
adjusting, according to the delay, residence time of the service data in the optical transport network so that the time is equal to a preset reference delay.

2. The method according to claim 1, wherein the delay information is a timestamp, and the acquiring, according to the delay information from the first optical transport network device to the second optical transport network device in the optical transport network, the delay of transporting the service data from the first optical transport network device to the second optical transport network device comprises:
receiving service data sent by the first optical transport network device, wherein the service data comprises a timestamp and the timestamp records a time point at which the first optical transport network device receives the service data; and
acquiring the timestamp from the service data, and calculating the delay of the service data in the optical transport network according to the timestamp and current time,
wherein a clock domain of the first optical transport network device is the same as that of the second optical transport network device.

3. The method according to claim 1, wherein the delay information is delay time of each delay unit in all optical transport network devices in the optical transport network, and the acquiring, according to the delay information from the first optical transport network device to the second optical transport network device in the optical transport network, the delay of transporting the service data from the first optical transport network device to the second optical transport network device comprises:
acquiring delay time of each delay unit in all optical transport network devices in the optical transport network; and
adding delay time of each delay unit to acquire the delay of the service data in the optical transport network.

4. The method according to claim 3, wherein when the delay unit is a first input first output unit, the acquiring the delay time of each delay unit in all the optical transport network devices in the optical transport network and adding the delay time of each delay unit to acquire the delay of the service data in the optical transport network comprises:
acquiring a depth of each first input first output unit in all the optical transport network devices in the optical transport network, and
adding the depth of each first input first output unit to acquire a total depth; and
correspondingly, the adjusting, according to the delay, the residence time of the service data in the optical transport network so that the time is equal to the preset reference delay comprises:
adjusting, according to the total depth and a preset reference depth, a depth of a buffer first input first output unit in the second optical transport network device so that a sum of the total depth and the depth of the buffer first input first output unit is equal to the preset reference depth.

5. The method according to claim 1, wherein the adjusting, according to the delay, the residence time of the service data in the optical transport network so that the time is equal to the preset reference delay comprises:
adjusting, according to the delay and the preset reference delay, delay time of a buffer delay unit in the second optical transport network device so that a sum of the delay and the delay time of the buffer delay unit is equal to the preset reference delay.

6. An optical transport network device, called a second optical transport network device, the second optical transport network device comprising:
an acquisition module, configured to acquire, according to delay information from a first optical transport network device to the second optical transport network device in an optical transport network, a delay of transporting service data from the first optical transport network device to the second optical transport network device, wherein the first optical transport network device is connected to a base band unit and the second optical transport network device is connected to a remote radio frequency unit, or the first optical transport network device is connected to the remote radio frequency unit and the second optical transport network device is connected to the base band unit; and
a compensation module, configured to adjust, according to the delay acquired by the acquisition module, residence time of the service data in the optical transport network so that the time is equal to a preset reference delay.

7. The optical transport network device according to claim 6, wherein the delay information is a timestamp, and the acquisition module is specifically configured to: receive service data sent by the first optical transport network device, wherein the service data comprises a timestamp and the timestamp records a time point at which the first optical transport network device receives the service data, acquire the timestamp from the service, and calculate the delay of the service data in the optical transport network according to the timestamp and current time, wherein a clock domain of the first optical transport network device is the same as that of the second optical transport network device.

8. The optical transport network device according to claim 6, wherein the delay information is delay time of each delay unit in all optical transport network devices in the optical transport network, and the acquisition module is specifically configured to acquire the delay time of each delay unit in all optical transport network devices in the optical transport network and add the delay time of each delay unit to acquire the delay of the service data in the optical transport network.

9. The optical transport network device according to claim 8, wherein when the delay unit is a first input first output unit, the acquisition module is specifically configured to acquire a depth of each first input first output unit in all the optical transport network devices in the optical transport network; and add depths of the first input first output units to acquire a total depth;
correspondingly, the second optical transport network device further comprises a buffer first input first output unit; and
the compensation module is specifically configured to: adjust, according to the total depth and a preset reference depth, a depth of the buffer first input first output unit so that a sum of the total depth and the depth of the buffer first input first output unit is equal to the reference depth.

10. The optical transport network device according to claim 6, wherein the second optical transport network device further comprises a buffer delay unit; and
the compensation module is specifically configured to adjust, according to the delay and the preset reference delay, delay time of the buffer delay unit so that a sum of the delay and the delay time of the buffer delay unit is equal to the reference delay.
